# EUROPEAN PATENT SPECIFICATION

(11) **EP 3 664 229 B1**
(45) Date of publication and mention of the grant of the patent: **11.11.2026**
(21) Application number: 18210740.9
(22) Date of filing: 06.12.2018
(51) Int. Cl.: H01R 39/38, F03D 80/30, H01R 39/64, H02G 13/00

(54) **BRUSH ASSEMBLY**
BÜRSTENANORDNUNG
ENSEMBLE BROSSE

(43) Date of publication of application: 10.06.2020
(73) Proprietor: Siemens Gamesa Renewable Energy A/S, 7330 Brande (DK)
(72) Inventor: Michaelsen, Claus, 7400 Herning (DK); Olsen, Kaj, 8240 Riiskov (DK)
(74) Representative: SGRE-Association

(56) References cited:
- EP-A2- 0 304 528
- WO-A1-2018/137804
- JP-A- H0 560 053
- US-A1- 2013 336 786

## Description

The invention describes a brush assembly, a lightning protection circuit, and a wind turbine.

Because of its height and generally exposed location, a wind turbine may receive frequent lightning strikes and must be equipped with a reliable lightning protection system (LPS) to prevent damage to its rotor blades, its electrical components, and its structural components. A wind turbine rotor blade is normally provided with one or more receptors on its outer surface that act to attract a lightning strike. Each receptor is connected to a download cable or "down conductor" extending through the blade interior. A down conductor usually extends from near the thin blade tip (at the outermost end of the blade) to the circular root (at the innermost end of the blade, where it is mounted to the hub) and is dimensioned to safely transport lightning current.

Unusually, the only physical connection between the rotatory part of the wind turbine and the stationary part of the wind turbine is via a bearing. This must also be protected from lightning current. Therefore, the wind turbine's LPS must include some kind of lightning current bridge from the rotating part of the wind turbine to its stationary part. From each blade root end, lightning current must be led to the stationary region of the wind turbine, from which it can be transported through a down conductor arrangement through the tower and to ground.

The rotatory part of a wind turbine generally comprises the aerodynamic rotor with its rotor blades and hub, as well as any part that is directly or indirectly turned by the aerodynamic rotor, e.g. a low-speed main shaft, an outer rotor, etc. along with the rotatory part of any bearing. The stationary part of a wind turbine can include any nonrotating parts, for example the stationary part of any bearing, a nacelle or canopy, the tower, etc. Therefore, the usual way of providing a path for lightning current from the rotatory part of the wind turbine to the stationary part is by means of a sliding brush connection at the interface between any down conductors of the rotatory part to the further LPS path through the stationary part to ground, for example in the arrangement shown in WO2018/137804A1. A carbon or graphite brush is generally in the shape of a block, and current is transported to the brush via a cable that terminates in the body of the brush. One face of the brush is pressed against a surface of the rotatory/stationary interface. Lightning current will pass through the brush on its path to ground, and the capacity of the brush to carry current is largely determined by the capacity of the brush cable and the area of the contact face, i.e. by the crosssectional area of the brush. Because of the need to transport extremely high lightning currents reliably and efficiently over a very brief time, a conventional LPS for a wind turbine will generally make use of multiple such brushes at the interface between the rotatory part and the stationary part.

However, as generator designs become more compact, it is becoming increasingly difficult to incorporate the conventional brushes in the LPS in such a way that the brush assemblies can also be accessed for regular maintenance, since the carbon/graphite brushes wear down over time and need to be exchanged at regular intervals. The need to include the plurality of brushes means that the generator design is subject to additional constraints, and this can require undesirable compromises to be made.

It is therefore an object of the invention to provide an improved way of guiding lightning current through the rotatory/stationary interface of a wind turbine.

This object is achieved by the brush assembly of claim 1; by the lightning protection circuit of claim 9; and by the wind turbine of claims 10 and 11.

A brush assembly is typically realised for transferring an electric current between a first structure and a second structure. One of these structures is typically stationary, while the other is rotatory. A brush assembly comprises a holder with a recess shaped to accommodate a brush. For the purposes of explaining the invention, it shall be assumed that the holder is mounted to the second structure. The recess is formed such that a brush face is exposed, and the brush assembly further comprises a means of ensuring that the exposed brush face makes contact with a surface of the first structure. Electric current transferred to the brush will then be able to pass between the first and second structures. The inventive brush assembly is characterized in that the recess is shaped to also expose a second brush face; and the brush assembly also comprises a means of ensuring that this second exposed brush face makes contact with a surface of the second structure.

In a conventional brush assembly, the electric current is transferred to the brush by means of a brush cable that terminates in the body of the brush, and the current is then transferred between the first and second structures through a single brush face. In the inventive brush assembly, electric current is transferred to the brush through the second exposed brush face. An advantage of the inventive brush assembly is therefore a significantly lower impedance compared to a conventional brush assembly. The significantly lower impedance advantageously reduces the voltage drop at the interface between the first and second structures. Instead of channelling the electric current to a brush cable for transfer to the brush, it can pass directly through the brush body from one structure to the other, entering and exiting the brush through an exposed brush face.

Since the design of the inventive brush assembly remains similar to the design of conventional brush assemblies - with regard to the holder and the first displacement means - the cost of manufacturing the inventive brush assembly is essentially the same. However, because the inventive brush assembly is considerably more effective in safely transferring high transient currents, it is possible to use a reduced number of these brush assemblies in a large electrical machine, thereby reducing the costs of manufacture and also reducing the costs associated with regular maintenance procedures.

According to the invention, the lightning protection circuit of a wind turbine comprises a first current path arrangement realised to provide a path for lightning current through the rotatory part of a wind turbine towards an interface to the stationary part of the wind turbine; a second current path arrangement realised to provide a path for lightning current through the stationary part of the wind turbine to ground; and an embodiment of the inventive brush assembly for electrically connecting the first current path arrangement to the second current path arrangement. The inventive brush assembly ensures that any lightning current sees only a low impedance at the interface between the rotatory part and the stationary part, and can be safely and reliably transported across this interface.

According to the invention, the wind turbine can comprise a number of such lightning protection circuits. For example, one lightning protection circuit may be used to transfer lightning current from the rotor blades to the stationary part of the wind turbine; another lightning protection circuit may be used to transfer lightning current from an outer rotor of the generator to the stationary part of the wind turbine; etc. Any such lightning protection circuit can implement an embodiment of the inventive brush assembly at an interface between a rotatory part and a stationary part.

Particularly advantageous embodiments and features of the invention are given by the dependent claims, as revealed in the following description. Features of different claim categories may be combined as appropriate to give further embodiments not described herein.

According to the invention, the brush has the shape of a block, wherein the first brush face is perpendicular to the second brush face. In the following, without restricting the invention in any way, it may be assumed that a brush is a block of carbon or graphite material. It may also be assumed that the exposed first face is adjacent to the exposed second face. The carbon/graphite block can have an essentially rectangular shape, i.e. the shape of a brick. In that case, the exposed first and second brush faces are essentially orthogonal to each other, i.e. these faces are perpendicular. A brush can have any suitable dimensions, for example to present a first exposed face with side lengths in the order of 10 mm - 30 mm, and to present a second exposed face with side lengths in the order of 30 - 50 mm. The actual brush dimensions may vary and may be chosen in dependence of various factors, of which current carrying capacity is most relevant.

The brush assembly is arranged at the interface between the first structure and the second structure. One of these is stationary, while the other is rotatable. The brush assembly can be secured to the stationary structure, so that its first exposed face is pressed against a surface of the rotating structure. In such an embodiment, the stationary structure can be regarded as a supporting structure for the brush assembly, while the rotatable structure may be regarded as a sliding structure, since - from the viewpoint of the brush - when it rotates, it appears to slide past the exposed first brush face.

Equally, the brush assembly can be secured to the rotatory structure, so that its first exposed face is pressed against a surface of the stationary structure. In such an embodiment, the rotatory structure can be regarded as the supporting structure for the brush assembly, while the stationary structure may be regarded as the sliding structure, since - from the viewpoint of the brush mounted to the rotatory structure - the stationary structure appears to slide past the exposed first brush face. In the following, the terms "first structure" and "sliding structure" may be regarded as synonyms unless otherwise indicated. Similarly, the terms "second structure" and "supporting structure" may be regarded as synonyms unless otherwise indicated.

The first displacement means is preferably realised to press against the brush face that is parallel to and opposite the first exposed face. A displacement means may be understood to be any device or component that can apply a force to move the brush in a desired direction. In the following, without restricting the invention in any way, it may be assumed that a displacement means is realised as a spring-loaded mechanism to press the brush in the desired direction. For example, the first displacement means can be a spring-loaded mechanism arranged to press the first exposed brush face with an essentially constant pressure against a surface of the sliding structure. This first displacement means can comprise the same kind of spring that is usually used in a conventional brush assembly, and which is able to maintain the desired pressure even as the brush wears down by friction between the exposed first brush face and the surface of the sliding structure.

The second displacement means is preferably realised to press against the brush face that is parallel to and opposite the second exposed face. The second displacement means can also be a spring-loaded mechanism, in this case a mechanism that presses the second exposed brush face against a surface of the supporting structure. In a particularly preferred embodiment of the invention, the second displacement means comprises a plate arranged to press against the brush face that is opposite the second exposed face. The plate can have the same size as the brush when it is new, i.e. when it fills the recess in the holder. As an alternative to a flat plate, the second displacement means can for example comprise one or more spherical or cylindrical rollers that are free to rotate in a suitable holder. A spherical roller will only make a point contact to the rear surface of the brush, and a cylindrical roller will only make a line contact to the rear surface of the brush.

Because the brush assembly is mounted to the supporting structure, the second exposed brush face will not be subject to wear. The second displacement means need not be as strong as the first displacement means.

As indicated above, the exposed first brush face will be subject to wear, because it is continually pressed against the surface of the sliding structure. This means that the gradually diminishing remainder of the brush is moved slowly but steadily in the direction of the sliding structure. It is important not to obstruct this movement. Therefore, in a further preferred embodiment of the invention, the second displacement means comprises a low-friction or frictionless contact to the brush. For example, if the second displacement means comprises a plate to press against the brush, this plate can be given a low-friction surface so that the brush can freely slide over the plate in the direction of the sliding structure. Similarly, a point contact or line contact between a rolling element and the brush will be inherently low-friction.

In a further preferred embodiment of the invention, the brush assembly further comprises a brush cable arranged to terminate in the body of the brush, and a connector for electrically connecting the brush cable to the supporting structure. A brush equipped with a brush cable may be deployed in applications in which it is desirable to also guide smaller currents to ground (in addition to the large lightning currents). The inherent higher impedance of the brush cable does not present an obstacle to currents such as capacitive leak currents from a frequency converter, for example.

In a preferred embodiment of the invention, the wind turbine comprises a lightning protection circuit in which the brush assembly is mounted at an interface between the generator rotor and a stationary part, for example a stationary generator housing, a rotor brake plate, a canopy or nacelle, etc. In a direct-drive wind turbine, for example, a brush assembly can be mounted at an interface between the outer rotor and a front plate of the stator. These parts can be made of steel and can therefore be inherently conductive, so that transfer of high lightning currents across this interface can be done safely and reliably.

In a preferred embodiment of the invention, the current path arrangement of a lightning protection circuit includes the supporting structure to which the brush assembly is mounted, i.e. the body of the supporting structure is electrically conductive and is part of the electrical circuit. The electrical connection between that current path arrangement and the brush is through the second exposed face of the brush.

In a further preferred embodiment of the invention, the current path arrangement of a lightning protection circuit includes the sliding structure against which the first exposed face of the brush is pressed, i.e. the body of the sliding structure is electrically conductive and is part of the electrical circuit.

Alternatively, the sliding structure and/or the supporting structure can be provided with suitable electrically conductive contact surfaces so that lightning current can pass via the brush between the sliding structure and the supporting structure on its way to ground.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 is a simplified representation of a direct-drive wind turbine and its lightning protection system;
Fig 2 shows a first embodiment of the inventive brush assembly;
Fig 3 shows a second embodiment of the inventive brush assembly;
Fig 4 shows a partial cross-section of the embodiment of Fig 3;
Fig 5 shows an embodiment, that does not form part of the invention, of a brush assembly in place in a first environment;
Fig 6 shows a cross-section of the embodiment of Fig 5;
Fig 7 shows an embodiment of the inventive brush assembly in place in a first environment;
Fig 8 shows an embodiment,that does not form part of the invention, of a brush assembly in place in a first environment.

In the diagrams, like numbers refer to like objects throughout. Objects in the diagrams are not necessarily drawn to scale.

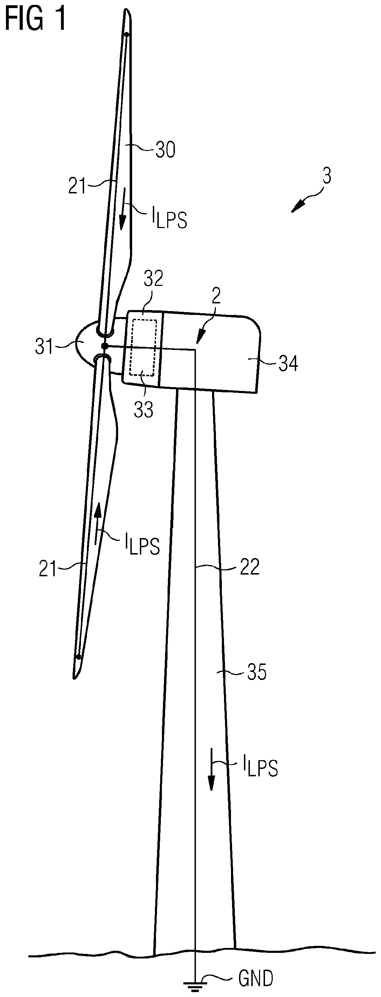

Fig 1 is a simplified diagram of a direct-drive wind turbine 3 and its LPS 2. The aerodynamic rotor of the wind turbine comprises the rotor blades 30 mounted to the hub 31. The outer rotor 32 of the generator can be enclosed in a housing that rotates as one with the outer rotor 32. The diagram also shows a stationary canopy 34 or nacelle 34. The stator 33 of the generator is mounted in some way to a bedframe or fixed support, and connected to the rotor 32 by means of a bearing arrangement. The stationary part of the wind turbine 3 is mounted by means of a yaw interface at the top of a tower 35. To safely conduct lightning current to ground, each rotor blade 30 is equipped with a number of receptors connected to a down conductor of a current path arrangement 21. A rotor blade down conductor is arranged in the interior of the blade 30. All down conductors of this current path arrangement 21 can convene in the hub 31, and the lightning current I_{LPS} is transferred by an embodiment of the inventive brush assembly (not shown here) to a further current path arrangement 22 that transports the lightning current I_{LPS} through the stationary part of the wind turbine 3 and safely to ground GND.

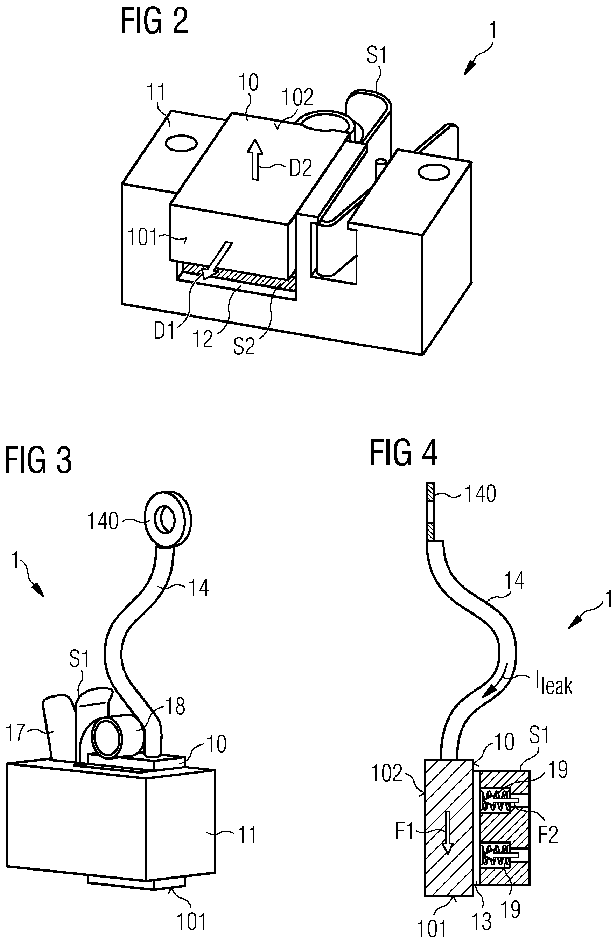

Fig 2 shows a first embodiment of the inventive brush assembly 1, with another view of a second embodiment given in Fig 3, and a partial cross-section given by Fig 4. The brush assembly 1 comprises a holder 11 with a recess 12 shaped to accommodate a carbon or graphite brush 10 with an essentially rectangular form. The diagram also indicates through-holes which can be used to fasten the brush assembly 1 to a supporting structure (not shown). The brush assembly 1 is constructed to expose two faces 101, 102 of the brush 10. These two faces 101, 102 are essentially orthogonal and can be pressed against orthogonal receiving surfaces of the supporting structure and sliding structure (not shown). To this end, the inventive brush assembly 1 is constructed to apply two orthogonal forces F1, F2 on the brush 10, so that it will be pushed in two orthogonal directions when the brush assembly 1 is installed at an interface between a rotating body and a stationary body. An electrical connection between the rotatory body and a stationary body is therefore presented by these orthogonal brush faces 101, 102, so that this electrical connection is characterized by a favourably low impedance. Such a favourably low impedance is an advantage when large lightning currents must be transferred rapidly across the interface between the rotatory structure and the stationary structure.

To achieve the desired forces F1, F2, a first spring-loading means S1 is provided to push the brush 10 in a first direction D1, and a second (weaker) spring-loaded means S2 is provided to push the brush 10 in a second direction D2. The first spring-loading means S1 can include a powerful spring 18 as known from the conventional brush assembly, to achieve a strong force F1, with a release clip 17 to allow the spring 18 to be removed when a worn brush must be replaced by a new brush. In this exemplary embodiment, the second spring-loaded means S2 is provided with a low-friction plate 13 and a relatively weak spring-loaded means 19 so that the brush 10 is not prevented from moving relative to this plate 13 when pushed in the first direction D1 in response to force F1.

In the embodiment shown in Fig 2, the brush assembly 1 deploys only a block-shaped brush 10 that is not attached to any brush cable, and which is transports lightning current directly between the supporting structure and the sliding structure, through the exposed faces 101, 102 of the brush 10. In the embodiment shown in Fig 3 and Fig 4, the brush assembly 1 also includes a brush cable 14. Here, the brush cable 14 is provided as an integral part of the brush 10. One end of the brush cable 14 effectively terminates in the body of the brush 10. The other end of the brush cable 14 terminates in a connector 140 with which an electrical connection may be made between the brush cable 14 and the supporting structure to which the brush assembly 1 is mounted. The brush cable 14 may serve to continuously guide relatively small trickle currents Iₗₑₐₖ to ground, for example.

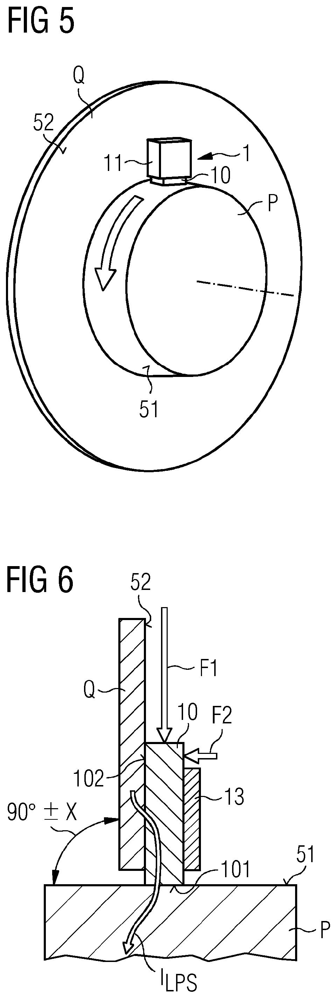

Fig 5 shows an embodiment, that does not form part of the invention, of the brush assembly 1 (indicated only very schematically) in place in a first environment. Here, the brush assembly 1 is arranged at an interface between a stationary component Q and a rotatory component P, for example in an electrical machine comprising a stator Q and a rotating main shaft P. It is assumed that the body of the stator Q and the body of the rotating main shaft P are electrically conductive and are being used in a circuit path to guide lightning current to ground. In this exemplary embodiment, the holder 11 is secured to the stationary component Q, for example by bolts or other fasteners (not shown), so that the brush assembly 1 is also stationary relative to the rotatory component P. The first face 101 of the brush 10 is pressed against a surface 51 of the rotatory component P, while the second face 102 of the brush 10 is pushed against a surface 52 of the stationary component Q. In this way, a very low impedance connection is achieved between the stationary component Q and the rotatory component P, and large lightning currents I_{LPS} can be safely transferred between these components Q, P on their way to electrical ground. Fig 6 shows this embodiment in cross-section (for the sake of clarity, the diagram does not show the holder 11 or the spring-loaded means S1, S2), and illustrates the surface contact between the first exposed face 101 of the brush 10 and the sliding surface 51 of the rotatory component P, and the favourably large surface contact between the second exposed face 102 of the brush 10 and the surface 52 of the stationary component Q. The stationary component Q might be a stator front plate, while the rotatory component P may be the rotatable main shaft of an indirect-drive generator. The contact surfaces 51, 52 of these components Q, P are generally at right angles to one another at their interface, but it shall be understood that some tolerance is acceptable, so that the angle subtended between the contact surfaces 51, 52 may be assumed to be 90° ± some tolerance. This cross-section applies also to the following two embodiments.

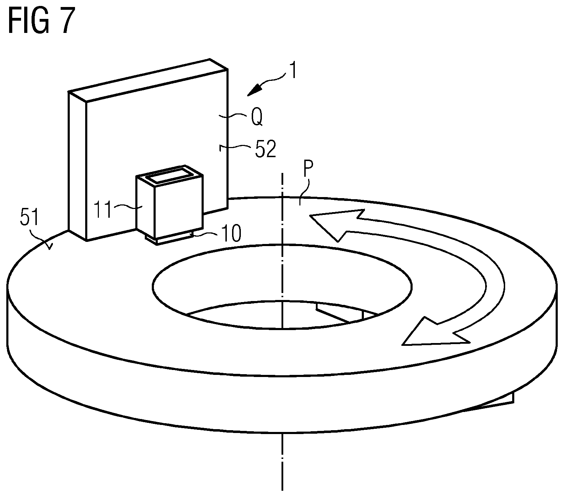

Fig 7 shows an embodiment of the inventive brush assembly 1 in place in a second environment. Here, the first structure P is a rotatory component of the aerodynamic rotor or outer rotor of a direct-drive wind turbine, for example. The second structure Q is a stationary component, for example a structural part of a bedframe. Here also, it is assumed that the body of the stationary component Q and the body of the rotatory component P are electrically conductive and are being used in a circuit path to guide lightning current to ground. Again, the brush assembly 1 is arranged at an interface between the stationary component Q and the rotatory component P. In this embodiment also, the holder 11 is secured to the stationary component Q, for example by bolts or other fasteners (not shown), so that the brush assembly 1 is held still relative to the rotatory component P. The first face 101 of the brush 10 is pushed against a sliding surface 51 of the rotatory component P, while the second face 102 of the brush 10 is pressed against a surface 52 of the stationary component Q. This embodiment is in principle the same as the embodiment of Fig 6, with the difference that the sliding surface 51 of the rotatory component is in the same plane as the first exposed brush face 101.

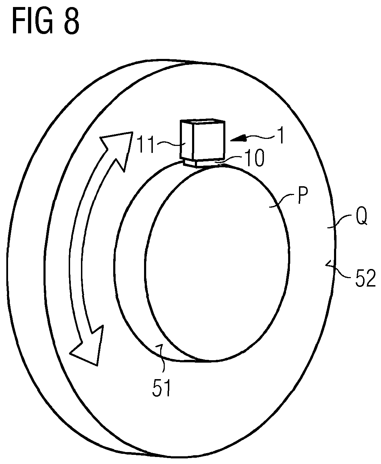

Fig 8 shows an embodiment, that does not form part of the invention, of the brush assembly 1 in place in a third environment. Here, the first structure P is stationary, and the second structure Q is rotatory. In this case also, it is assumed that the body of the rotatory component Q and the body of the stationary component P are electrically conductive and are being used in a circuit path to guide lightning current to ground. The brush assembly 1 is arranged at the interface between the stationary component P and the rotatory component Q. In this embodiment, the holder 11 is secured to the rotatory component Q, for example by bolts or other fasteners (not shown), so that the brush assembly 1 is held still relative to the stationary component P, and the rotatory component Q appears to slide past the first exposed face 101 of the brush 10. Therefore, the first face 101 of the brush 10 is effectively pushed against a "sliding surface" 51 of the stationary component P, while the second face 102 of the brush 10 is pressed against a surface 52 of the second structure Q. The cross-section of Fig 6 applies here also, with the difference that the sliding surface 51 "seen" by the first exposed brush face 101 is actually stationary, the apparent rotation arising from the fact that the brush assembly 1 is attached to the rotatory component Q.

## Claims

1. A brush assembly (1) for a wind turbine (3) for transferring lightning current (I_{LPS}) between a first structure (P) and a second structure (Q) of the wind turbine (3), which brush assembly (1) comprises
- a holder (11) realised for mounting to one of the two structures (P, Q);
- a brush (10) comprising a first brush face (101) and a second brush face (102), wherein the brush (10) has the shape of a block, and wherein the first brush face (101) is perpendicular to the second brush face (102);
- a recess (12) formed in the holder (11), which recess (12) is shaped to accommodate the brush (10) and to expose the first brush face (101); and
- a first displacement means (S1) arranged to press the first exposed brush face (101) against a surface (51) of the first structure (P);
**characterized in that** the recess (12) is shaped to also expose the second brush face (102), and the brush assembly (1) further comprises a second displacement means (S2) arranged to press the second exposed brush face (102) against a surface (52) of the second structure (Q).

2. A brush assembly according to claim 1, wherein the first displacement means (S1) comprises a spring (18) realised to press against the brush face that is opposite the first exposed brush face (101).

3. A brush assembly according to any of the preceding claims, wherein the first displacement means (S1) comprises a release means (17) arranged to facilitate removal of a worn brush from the holder (11) and to allow insertion of a replacement brush into the holder (11).

4. A brush assembly according to any of the preceding claims, wherein the second displacement means (S2) comprises a low-friction contact to the brush face that is opposite the second exposed brush face (102).

5. A brush assembly according to any of the preceding claims, wherein the second displacement means (S2) comprises a plate (13) arranged to lie against the brush face that is opposite the second exposed brush face (102).

6. A brush assembly according to any of the preceding claims, wherein the second displacement means (S2) comprises a number of rolling elements (18) realised to contact the brush face that is opposite the second exposed brush face (102).

7. A brush assembly according to any of the preceding claims, wherein the second displacement means (S2) is spring-loaded.

8. A brush assembly according to any of the preceding claims, comprising a brush cable (14) arranged to terminate in the body of the brush (10), and comprising a connector (140) for connecting the brush cable (14) to a structure (P, Q).

9. A lightning protection circuit (2) of a wind turbine (3), comprising
- a first current path arrangement (21) realised to provide a path for lightning current (I_{LPS}) through the rotatory part (30, 31, 32) of the wind turbine (3) towards an interface to the stationary part (33, 34, 35) of the wind turbine (3);
- a second current path arrangement (22) realised to provide a path for lightning current (I_{LPS}) through the stationary part (33, 34, 35) of the wind turbine (3) to ground; and
- a brush assembly (1) according to any of claims 1 to 8 for electrically connecting the first current path arrangement (21) to the second current path arrangement (22).

10. A wind turbine (3) comprising a lightning protection circuit (2) according to claim 9, wherein the brush assembly (1) is mounted at an interface between the generator rotor (32) and the generator stator (33).

11. A wind turbine (3), comprising a lightning protection circuit (2) according to claim 9, wherein the brush assembly (1) is mounted at an interface between the generator rotor (32) and a stationary housing (34).

12. A wind turbine according to claim 10 or claim 11, wherein a current path arrangement (21, 22) of a lightning protection circuit (2) includes an electrically conductive structure (32, 33, 34) to which the brush assembly (1) is mounted.

13. A wind turbine according to any of claims 10 to 12, wherein the brush assembly (1) of a lightning protection circuit (2) comprises a brush cable (14), and wherein the brush cable (14) is electrically connected to the structure (Q) to which the brush assembly (1) is mounted.

14. A wind turbine according to any of claims 10 to 13, realised as a direct-drive wind turbine (3).

## Patentansprüche

1. Bürstenbaugruppe (1) für eine Windturbine (3) zum Übertragen eines Blitzstroms (I_{LPS}) zwischen einer ersten Struktur (P) und einer zweiten Struktur (Q) der Windturbine (3), wobei die Bürstenbaugruppe (1) Folgendes umfasst:
- eine Halterung (11), die zum Montieren an einer der zwei Strukturen (P, Q) umgesetzt ist;
- eine Bürste (10), umfassend eine erste Bürstenfläche (101) und eine zweite Bürstenfläche (102), wobei die Bürste (10) die Form eines Blockes aufweist und wobei die erste Bürstenfläche (101) senkrecht zu der zweiten Bürstenfläche (102) ist;
- eine Aussparung (12), die in der Halterung (11) gebildet ist, wobei die Aussparung (12) dazu geformt ist, die Bürste (10) aufzunehmen und die erste Bürstenfläche (101) freizulegen; und
- ein erstes Verschiebemittel (S1), das dazu angeordnet ist, die erste freigelegte Bürstenfläche (101) gegen eine Oberfläche (51) der ersten Struktur (P) zu drücken;
**dadurch gekennzeichnet, dass** die Aussparung (12) dazu geformt ist, ebenfalls die zweite Bürstenfläche (102) freizulegen, und die Bürstenbaugruppe (1) ferner ein zweites Verschiebemittel (S2) umfasst, das dazu angeordnet ist, die zweite freigelegte Bürstenfläche (102) gegen eine Oberfläche (52) der zweiten Struktur (Q) zu drücken.

2. Bürstenbaugruppe nach Anspruch 1, wobei das erste Verschiebemittel (S1) eine Feder (18) umfasst, die dazu umgesetzt ist, gegen die Bürstenfläche zu drücken, die der ersten freigelegten Bürstenfläche (101) gegenüberliegt.

3. Bürstenbaugruppe nach einem der vorhergehenden Ansprüche, wobei das erste Verschiebemittel (S1) ein Freigabemittel (17) umfasst, das dazu angeordnet ist, eine Herausnahme einer verschlissenen Bürste aus der Halterung (11) zu erleichtern und eine Einführung einer Ersatzbürste in die Halterung (11) zu ermöglichen.

4. Bürstenbaugruppe nach einem der vorhergehenden Ansprüche, wobei das zweite Verschiebemittel (S2) einen reibungsarmen Kontakt mit der Bürstenfläche umfasst, die der zweiten freigelegten Bürstenfläche (102) gegenüberliegt.

5. Bürstenbaugruppe nach einem der vorhergehenden Ansprüche, wobei das zweite Verschiebemittel (S2) eine Platte (13) umfasst, die dazu angeordnet ist, an der Bürstenfläche anzuliegen, die der zweiten freigelegten Bürstenfläche (102) gegenüberliegt.

6. Bürstenbaugruppe nach einem der vorhergehenden Ansprüche, wobei das zweite Verschiebemittel (S2) eine Anzahl an Rollelementen (18) umfasst, die dazu umgesetzt ist, die Bürstenfläche zu kontaktieren, die der zweiten freigelegten Bürstenfläche (102) gegenüberliegt.

7. Bürstenbaugruppe nach einem der vorhergehenden Ansprüche, wobei das zweite Verschiebemittel (S2) federbelastet ist.

8. Bürstenbaugruppe nach einem der vorhergehenden Ansprüche, umfassend ein Bürstenkabel (14), das dazu angeordnet ist, in dem Körper der Bürste (10) zu enden, und umfassend einen Verbinder (140) zum Verbinden des Bürstenkabels (14) mit einer Struktur (P, Q).

9. Blitzschutzschaltung (2) einer Windturbine (3), umfassend:
- eine erste Strompfadanordnung (21), die dazu umgesetzt ist, einen Pfad für einen Blitzstrom (I_{LPS}) über den rotatorischen Teil (30, 31, 32) der Windturbine (3) in Richtung einer Schnittstelle zu dem stationären Teil (33, 34, 35) der Windturbine (3) bereitzustellen;
- eine zweite Strompfadanordnung (22), die dazu umgesetzt ist, einen Pfad für einen Blitzstrom (I_{LPS}) über den stationären Teil (33, 34, 35) der Windturbine (3) zu einer Masse bereitzustellen; und
- eine Bürstenbaugruppe (1) nach einem der Ansprüche 1 bis 8 zum elektrischen Verbinden der ersten Strompfadanordnung (21) mit der zweiten Strompfadanordnung (22).

10. Windturbine (3), umfassend eine Blitzschutzschaltung (2) nach Anspruch 9, wobei die Bürstenbaugruppe (1) an einer Schnittstelle zwischen dem Generatorrotor (32) und dem Generatorstator (33) montiert ist.

11. Windturbine (3), umfassend eine Blitzschutzschaltung (2) nach Anspruch 9, wobei die Bürstenbaugruppe (1) an einer Schnittstelle zwischen dem Generatorrotor (32) und einem stationären Gehäuse (34) montiert ist.

12. Windturbine nach Anspruch 10 oder Anspruch 11, wobei eine Strompfadanordnung (21, 22) einer Blitzschutzschaltung (2) eine elektrisch leitfähige Struktur (32, 33, 34) beinhaltet, an der die Bürstenbaugruppe (1) montiert ist.

13. Windturbine nach einem der Ansprüche 10 bis 12, wobei die Bürstenbaugruppe (1) einer Blitzschutzschaltung (2) ein Bürstenkabel (14) umfasst und wobei das Bürstenkabel (14) elektrisch mit der Struktur (Q) verbunden ist, an der die Bürstenbaugruppe (1) montiert ist.

14. Windturbine nach einem der Ansprüche 10 bis 13, die als eine direkt angetriebene Windturbine (3) umgesetzt ist.

## Revendications

1. Ensemble brosse (1) pour une éolienne (3) destiné à transférer un courant de foudre (I_{LPS}) entre une première structure (P) et une seconde structure (Q) de l'éolienne (3), ledit ensemble brosse (1) comprend :
- un support (11) réalisé pour être monté sur l'une des deux structures (P, Q) ;
- une brosse (10) comprenant une première face de brosse (101) et une seconde face de brosse (102), dans lequel la brosse (10) présente la forme d'un bloc, et dans lequel la première face de brosse (101) est perpendiculaire à la seconde face de brosse (102) ;
- un évidement (12) formé dans le support (11), ledit évidement (12) étant profilé pour loger la brosse (10) et pour exposer la première face de brosse (101) ; et
- un premier moyen de déplacement (S1) agencé pour exercer une pression sur la première face de brosse exposée (101) contre une surface (51) de la première structure (P) ;
**caractérisé en ce que** l'évidement (12) est profilé pour exposer également la seconde face de brosse (102), et l'ensemble brosse (1) comprend en outre un second moyen de déplacement (S2) agencé pour exercer une pression sur la seconde face de brosse exposée (102) contre une surface (52) de la seconde structure (Q).

2. Ensemble brosse selon la revendication 1, dans lequel le premier moyen de déplacement (S1) comprend un ressort (18) réalisé pour exercer une pression contre la face de brosse qui est opposée à la première face de brosse exposée (101).

3. Ensemble brosse selon l'une quelconque des revendications précédentes, dans lequel le premier moyen de déplacement (S1) comprend un moyen de libération (17) agencé pour faciliter le retrait d'une brosse usée du support (11) et pour permettre l'insertion d'une brosse de rechange dans le support (11).

4. Ensemble brosse selon l'une quelconque des revendications précédentes, dans lequel le second moyen de déplacement (S2) comprend un contact à faible frottement sur la face de brosse qui est opposée à la seconde face de brosse exposée (102).

5. Ensemble brosse selon l'une quelconque des revendications précédentes, dans lequel le second moyen de déplacement (S2) comprend une plaque (13) agencée pour prendre appui contre la face de brosse qui est opposée à la seconde face de brosse exposée (102).

6. Ensemble brosse selon l'une quelconque des revendications précédentes, dans lequel le second moyen de déplacement (S2) comprend une pluralité d'éléments roulants (18) réalisés pour venir en contact avec la face de brosse qui est opposée à la seconde face de brosse exposée (102).

7. Ensemble brosse selon l'une quelconque des revendications précédentes, dans lequel le second moyen de déplacement (S2) est sollicité par ressort.

8. Ensemble brosse selon l'une quelconque des revendications précédentes, comprenant un câble de brosse (14) agencé pour se terminer dans le corps de la brosse (10), et comprenant un raccord (140) pour raccorder le câble de brosse (14) à une structure (P, Q).

9. Circuit de protection contre la foudre (2) d'une éolienne (3), comprenant :
- un premier agencement de chemin de courant (21) réalisé pour fournir un chemin pour un courant de foudre (I_{LPS}) à travers la partie rotative (30, 31, 32) de l'éolienne (3) vers une interface avec la partie stationnaire (33, 34, 35) de l'éolienne (3) ;
- un second agencement de chemin de courant (22) réalisé pour fournir un chemin pour un courant de foudre (I_{LPS}) à travers la partie stationnaire (33, 34, 35) de l'éolienne (3) jusqu'à la terre ; et
- un ensemble brosse (1) selon l'une quelconque des revendications 1 à 8 pour relier électriquement le premier agencement de chemin de courant (21) au second agencement de chemin de courant (22).

10. Éolienne (3) comprenant un circuit de protection contre la foudre (2) selon la revendication 9, dans laquelle l'ensemble brosse (1) est monté au niveau d'une interface entre le rotor de générateur (32) et le stator de générateur (33).

11. Éolienne (3), comprenant un circuit de protection contre la foudre (2) selon la revendication 9, dans laquelle l'ensemble brosse (1) est monté au niveau d'une interface entre le rotor de générateur (32) et un carter stationnaire (34).

12. Éolienne selon la revendication 10 ou la revendication 11, dans laquelle un agencement de chemin de courant (21, 22) d'un circuit de protection contre la foudre (2) inclut une structure électriquement conductrice (32, 33, 34) sur laquelle l'ensemble brosse (1) est monté.

13. Éolienne selon l'une quelconque des revendications 10 à 12, dans laquelle l'ensemble brosse (1) d'un circuit de protection contre la foudre (2) comprend un câble de brosse (14), et dans laquelle le câble de brosse (14) est relié électriquement à la structure (Q) sur laquelle l'ensemble brosse (1) est monté.

14. Éolienne selon l'une quelconque des revendications 10 à 13, réalisée sous la forme d'une éolienne à entraînement direct (3).
